# EUROPEAN PATENT SPECIFICATION

(11) **EP 4 512 725 B1**
(45) Date of publication and mention of the grant of the patent: **04.02.2026**
(21) Application number: 24188519.3
(22) Date of filing: 15.07.2024
(51) Int. Cl.: B65B 5/10, B25J 15/08, B65B 35/36, B65G 47/90, B65H 31/30, B25J 9/00, B25J 9/02, B25J 15/10

(54) **METHOD AND SYSTEM FOR ARRANGING SACS OR BAGS IN BOXES**
VERFAHREN UND SYSTEM ZUM ANORDNEN VON SÄCKEN ODER BEUTELN IN SCHACHTELN
PROCÉDÉ ET SYSTÈME POUR DISPOSER DES SACS OU DES SACS DANS DES BOÎTES

(30) Priority: 02.08.2023 IT 202300016449
(43) Date of publication of application: 26.02.2025
(73) Proprietor: SALDOFLEX S.R.L., 21058 Solbiate Olona (Varese) (IT)
(72) Inventor: SIRONI, Alfredo, 20017 Rho (MI) (IT); POZZI, Flavio, 21010 Cardano Al Campo (VA) (IT)
(74) Representative: Ripamonti, Enrico

(56) References cited:
- CN-U- 201 816 805
- US-B1- 6 412 253

## Description

The present invention relates to a method and a system for boxing, that is arranging sacs or bags in boxes, according to the preamble of the corresponding independent claim.

As known, the sacs and bags (hereinafter referred to as "the product") for example made of paper, plastic material, of the biocompatible or non-biocompatible type, or made of another material, are made starting from rolls made of suitable material and they are arranged stacked on each other at the end of their conformation. The stacks of product appear as such at the exit of the production line and should be boxed for their distribution towards the site of use.

Known are automatic gripping systems which collect the stacks of product and move them towards a box: joined above a volume of the latter, such prior art systems release the transported stack thereinto which falls on a bottom wall of the box or on the stack already present therein.

Most of the prior art systems for gripping and moving stacks of product all share the common trait lying in the fact that they do not provide for that the stack be retained until inside the volume of the box; on the contrary, when the stacks are outside the box, but above the volume of the latter, such stacks are usually released and fall into the box by gravity.

Such boxing method, especially in the case where the products have scarce consistency (for example made of light material or like the "ORGANIC bags"), does not guarantee an order, an evenness and/or a precision in the arrangement and distribution of the product in the box.

Furthermore, given that the boxes are usually provided with movable flaps which are obviously open when boxing the product, the area for releasing the latter is always outside such flaps and this, extending the path for dropping the product into the box, increases the boxing times and heightens the possibility of an inappropriate deposition of the product in the box.

Lastly, the aforementioned prior art boxing methods provide for the need of rotating the box to align and arrange the stacks of product in a manner useful for packaging, also obtaining, but not exclusively, the orientation of the product exiting from the production line.

US6412253 describes the arrangement of a stack of flexible sacs or bags at the exit from a production line in a box. Such operation is carried out by firstly horizontally sliding a hand of a robot in a position around an end portion of the stack with gripping elements or front and rear grippers of the hand aligned with the edges of the end portion and another portion of the stack not retained by the hand. Therefore, the grippers are closed on the edges of the end portion with the front gripper positioned in the stack with respect to the rear gripper: therefore, the hand is lifted and rotated around a horizontal axis to fold the stack thus retained around a folding line adjacent to the front gripper and on whose side there is the gripped portion and on whose other side there is the other portion so that the stack of bags or sacs has an open-U-shape downwards.

The rear gripper is therefore released and once again engaged around the folded stack to press the other portion against the end portion still gripped by the front gripper. Therefore, the hand is rotated to one position with the stack folded and gripped when it is oriented horizontally. Subsequently, the grippers are introduced into the box with the stack of sacs or bags, and the folded stack is positioned in the box. The grippers are opened and the hand is lifted outside the container after releasing the folded stack thereinto.

An object of the present invention is to provide a method and a system that allow to box stacks of sacs or bags in an improved manner with respect to what can be obtained with the prior art boxing methods and systems.

In particular, an object of the invention is to provide a method and a system that allow an even arrangement of the stacks of product (in turn stacked on each other) in the boxes.

Another object of the invention is to provide a method and a system which allow the even arrangement mentioned above irrespective of the size of the box (and the height in particular).

A further object of the invention is to provide a method and a system that allows an even arrangement of the stacks of product in the box irrespective of the material with which product is made.

Another object of the invention is to provide a method and a system which allow to arrange multiple stacks of product arranged side by side in a single box.

A further object is to provide a method and a system that allow to box stacks of product with operating rate that equals the production process rate so as to allow to exploit the full potential of the machine that makes the product.

Another object is to provide a method and a system also for boxing spread and not only folded products as implemented by the systems currently available on the market.

Last but not least, other objects of the invention with respect to those indicated above, lie in providing a method and a system that are reliable to actuate and operate, that reveal high quality standards and allow a reliable repetitiveness of the boxing process, with high implementation flexibility irrespective of the size of the product and of the box.

These and other objects which shall be more apparent to the person skilled in the art are attained by a method and by a system according to the corresponding attached claims.

For a better understanding of the present invention, the following drawings are attached hereto, purely by way of non-limiting example, wherein:
figure 1 shows a top but schematic perspective view of a system for boxing stacks of sacs or bags according to the invention;
figure 2 shows a view from the right of the system schematically shown in figure 1;
figure 3 shows a front view of the system of figure 1;
figure 3A shows, enlarged, the detail indicated with Z in figure 3 schematically showing a detail of the system of figure 1;
figure 3B shows the content of figure, from another angle 3A;
figure 4 shows a top view of the system of figure 1 in a different operative step;

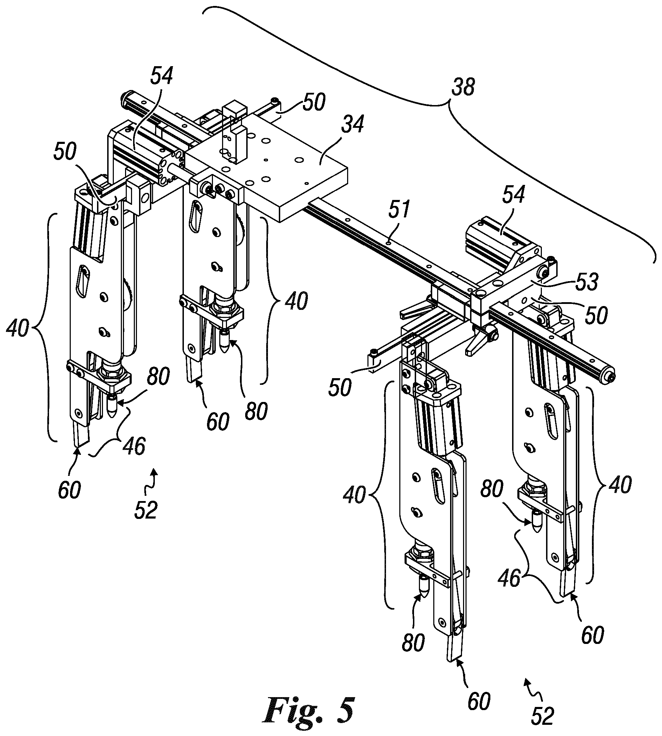

figure 5 shows a non-schematic perspective view of a possible embodiment of a component of the system of figure 1 in a first operative position;

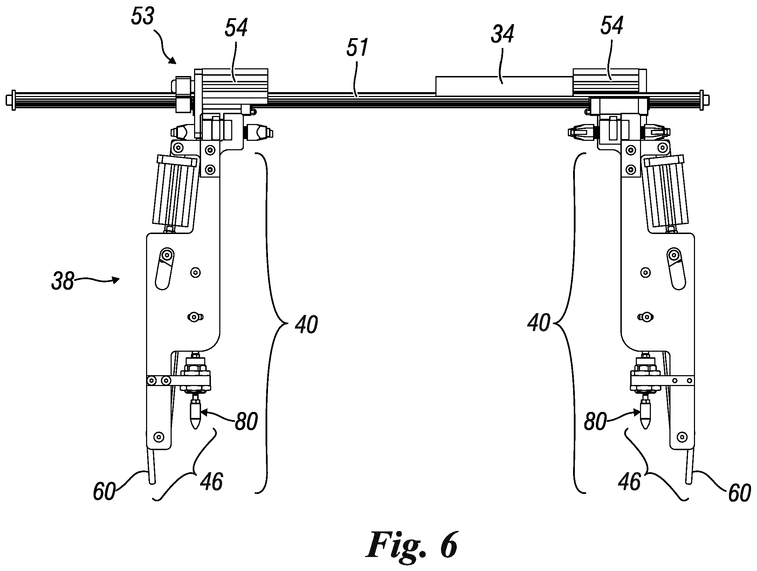

figure 6 shows a lateral view of the component of figure 5;

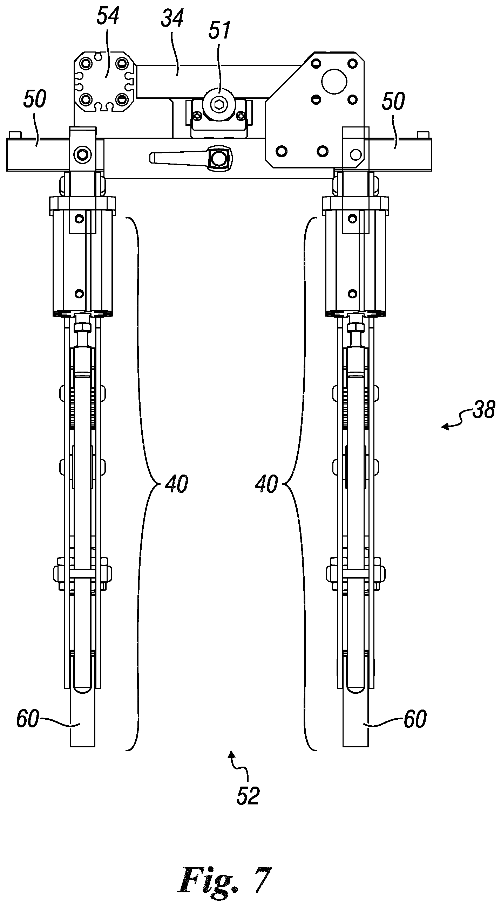

figure 7 shows a front view of the component of figure 5;
figure 8 shows a perspective view of the component of figure 5, but in a different operative position;
figure 9 shows a lateral view of the component of figure 8;
figure 10 shows a lateral perspective view of a part of the component shown in figure 5;
figure 11 shows a front view of the part of figure 10;
figure 12 shows a cross-sectional view according to line 12-12 of figure 11;
figure 13 shows a perspective front view of the component shown in figure 8;
figure 14 shows a front view of the part of figure 13;
figure 15 shows a cross-sectional view according to line 15-15 of figure 14;
figures 16 and 17 show a top view of the system of figure 1, with some parts omitted for the sake of greater clarity, during the boxing of differently arranged products in boxes;
figure 18 schematically shows an enlarged view of a specific embodiment of a part of the system of figure 1;
figure 19 shows a sequence of implementation steps of a first part of the method according to the invention; and
figure 20 shows a sequence of implementation steps of a second part of the method according to the invention.

With reference to the aforementioned figures, a system S according to the invention is arranged downstream of a usual machine (not shown) adapted to produce sacs or bags, for example made of plastic material (biodegradable or non-biodegradable). The sacs or bags mentioned above arranged stacked on each other and therefore forming stacks of sacs or bags (hereinafter, "product") indicated with 1 in the figures, protrude from such machine in a known manner.

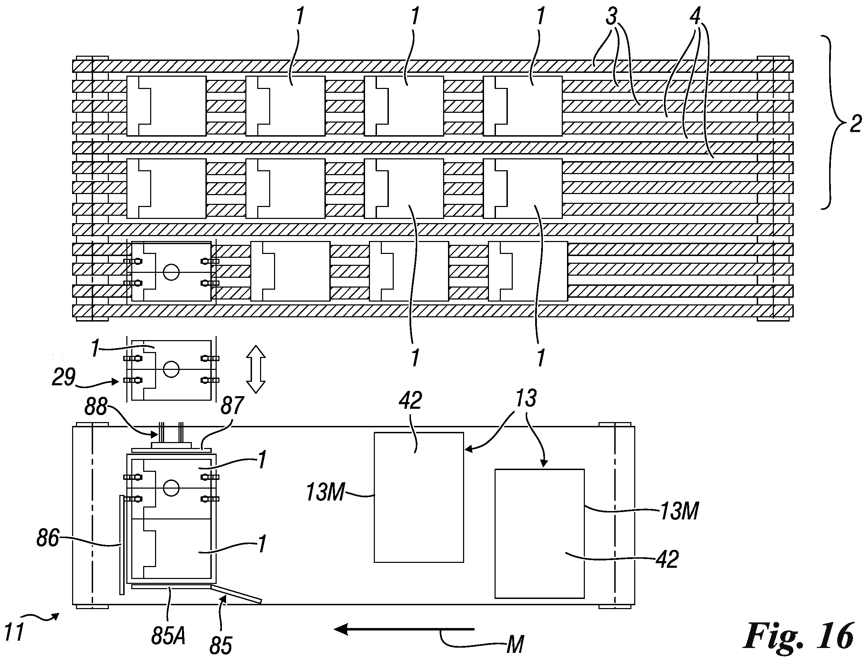

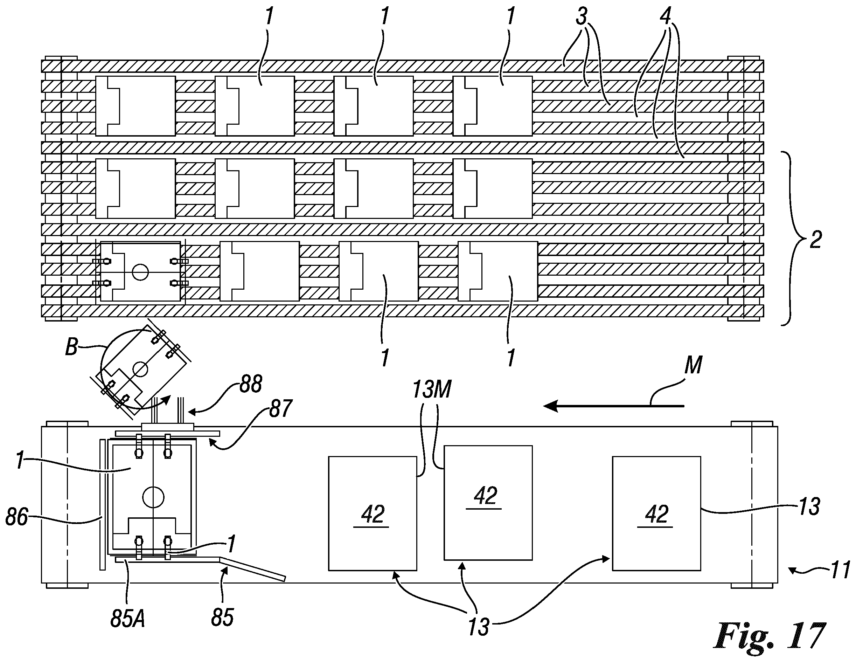

The stacks of product 1 are therefore received by the system S: in particular, the stacks of product 1 move from the machine mentioned above (that is from the production line) to a preferably movable work surface 2 for example defined by a plurality of movable belts 3, spaced apart from each other and separated by a space 4 (in particular see figures 16 and 17). The belts 3 move along the work surface between two rollers 6 and 7 arranged at the ends of such surface, at least one first roller 6 being driven in rotation around the longitudinal axis thereof by an electric motor 10.

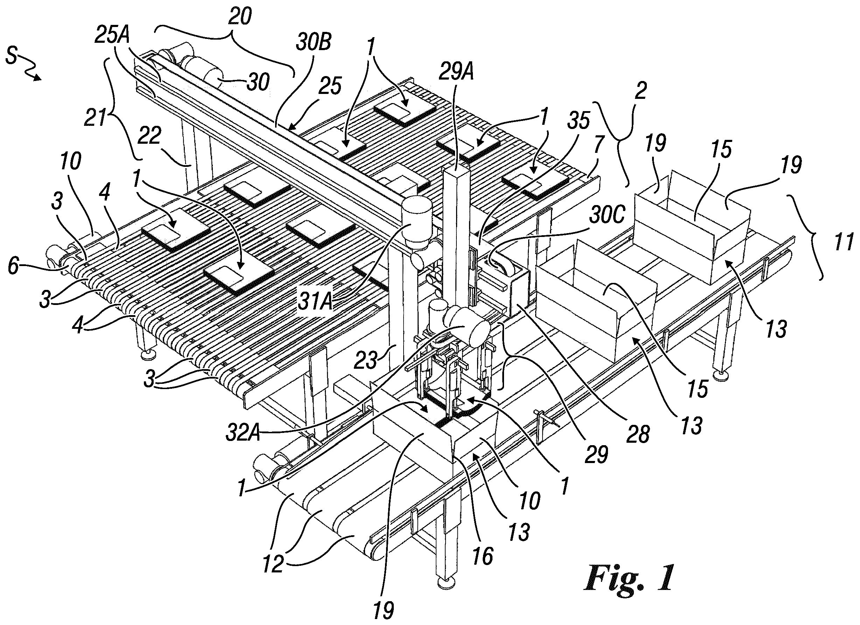

As shown for example in figures 1-4, the work surface 2 may simultaneously support a plurality of stacks of product 1 arranged on multiple rows spaced from each other.

On a side of the work surface 2 there is a second movable work surface 11 comprising a plurality of movable belts 12 (actuated similarly to the ones 3 described above) adapted to support boxes or containers 13 in turn adapted to receive the stacks of product 1 so that they can be sent and delivered to end users.

Obviously, the movable work surfaces 2 and 11 may also be obtained using other solutions, for example by means of one or more translating surfaces.

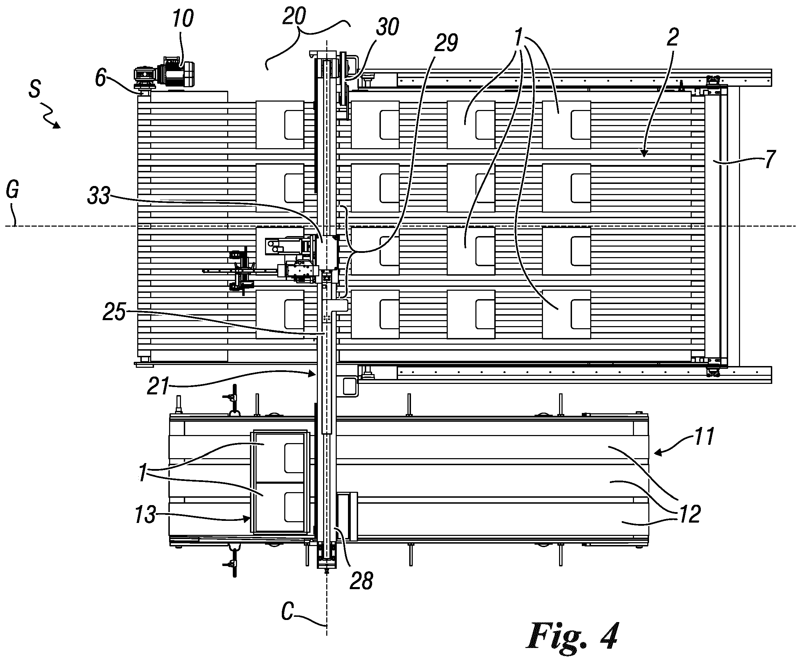

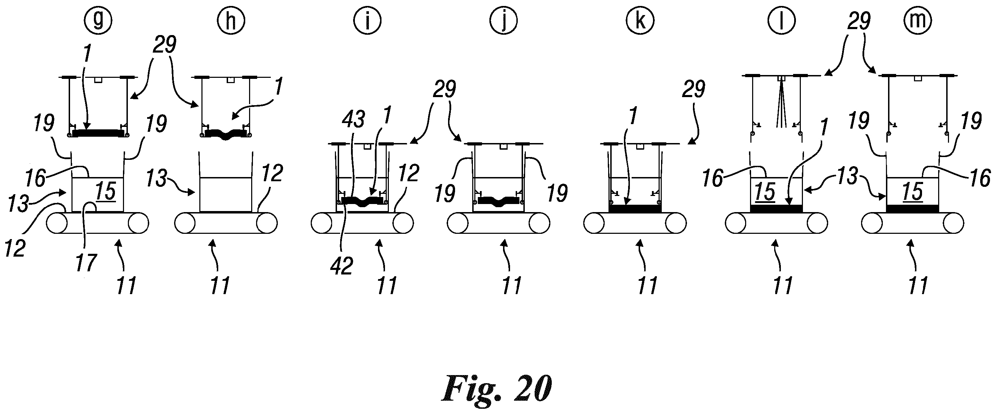

Each box 13 may contain a plurality of stacks of product 1 in turn stacked so as to form only one "column" of products; alternatively, two or more "columns" of stacks of product 1 may be arranged side by side in the box 13 (for example, figures 1 and 4 show two "columns" of stacks of products 1 arranged adjacent to each other). This as a function of the size of products and of the internal volume 15 of each box 13. An opening 16 of the box allows access to such internal volume, a bottom wall 17 delimiting such volume at the lower part (for example see figure 20). Flaps 19 enclose the box.

In order to arrange the stacks of product 1 in the boxes 13, there is provided for a collecting device 20 adapted to collect such stacks 1 and move them to the boxes. Such device comprises a bridge structure 21 arranged transversely above the work surface 2, said structure having supports 22 and 23 integrally joined with the fixed sides 24 of the work surface and a crosspiece 25, supported by such supports 22 and 23, having a longitudinal axis C orthogonal to the one G of the work surface 2 (see figure 4) that is orthogonal to the movement direction of the belts 3 and therefore of the stacks of product 1.

The crosspiece 25 comprises a portion 28 protruding from at least one side of the movable work surface 2 and superimposed on the second movable work surface 11 arranged on such side. The crosspiece 25 acts as a guide for moving, transversely to the work surfaces 2 and 11, a gripping member or manipulator 29 of the stacks of product 1; the manipulator 29 may therefore collect each stack of product 1 from the belts 3 of the work surface 2 and transfer it into the volume 15 of a box 13 arranged on the second work surface 11.

The movement of the manipulator along the crosspiece 25 is obtained in any known manner and preferably through an actuator or electric motor 30 acting on a common gear 30A connected thereto and adapted to move a belt 30B on an idle gear 30C and allow a more precise positioning of manipulator 29 above the work surface 2 so as to collect each stack of product 1 therefrom (and also its positioning above each box 13). Obviously, other actuators (for example pneumatic) can be alternatively used to move the manipulator.

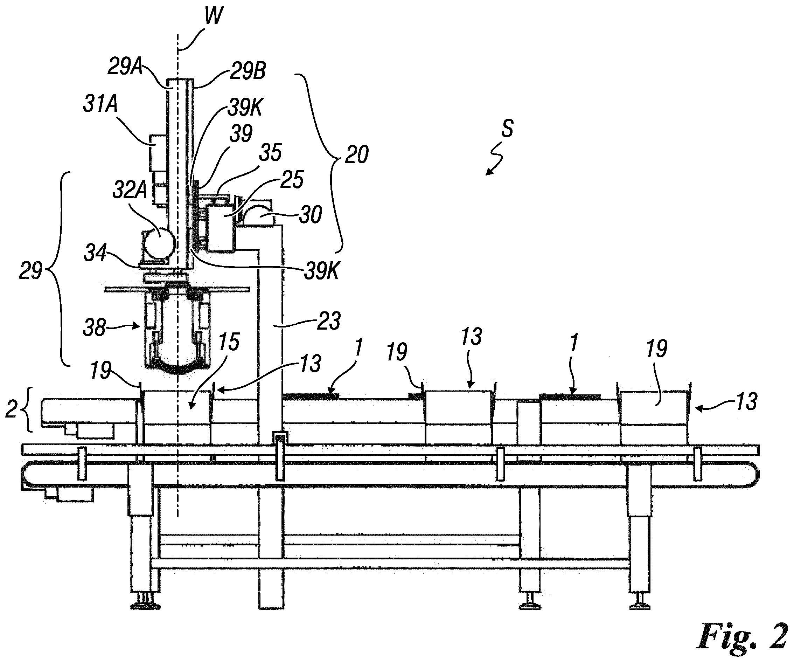

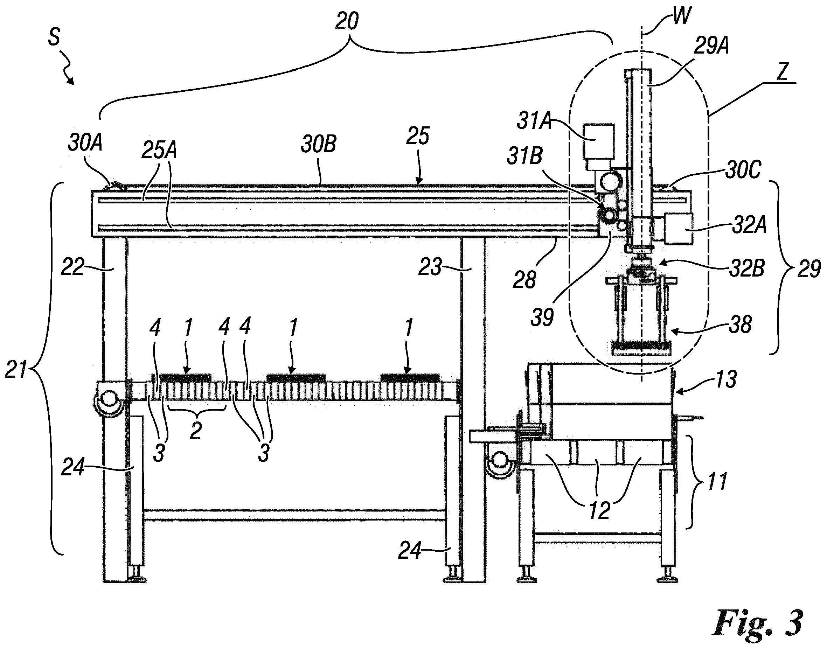

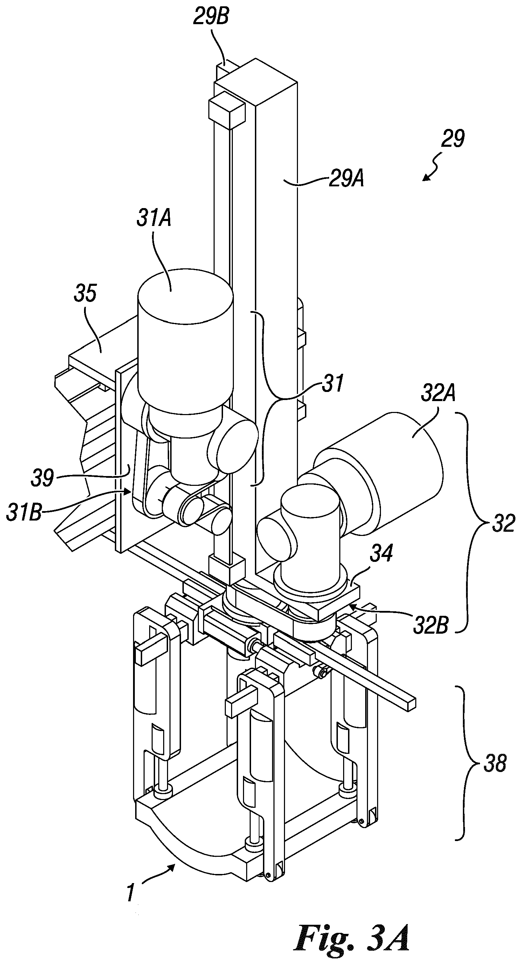

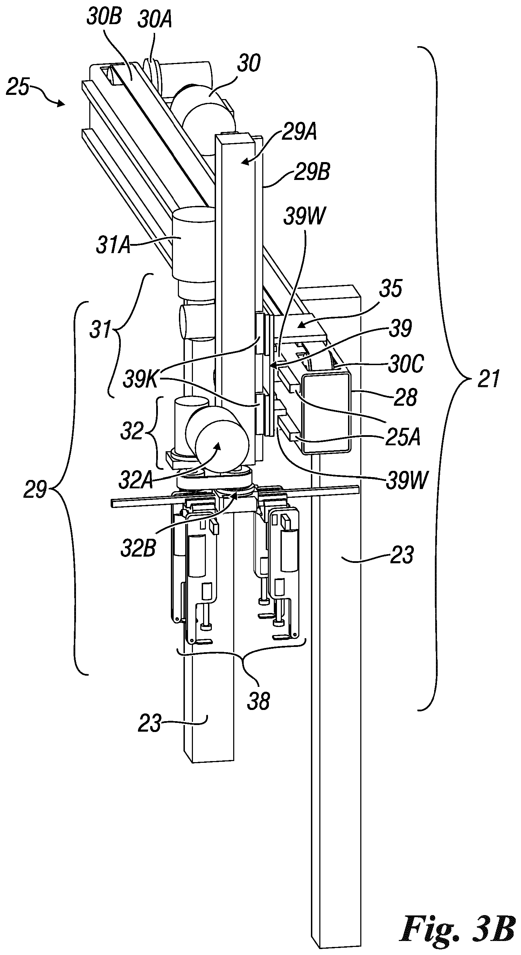

The motor or electric actuator 30 cooperates with the gears mentioned above to move the manipulator 29 along the crosspiece 25; another gear assembly cooperates with a different actuator or electric motor so as to allow the manipulator 29 to rotate around an axis W (see figures 2 and 3) orthogonal to the work surface 2.

As shown in the figures, and in particular in the schematic views of figure 3A and of figure 3B, the manipulator comprises a first electromechanical actuator 31 (with electric motor 31A and gears and idlers 31B) adapted to allow a movement of an assembly 38 for gripping the stacks of product 1 (described hereinafter) along a guide 29B (shown in figure 3B) of an upright 29A; the upright 29 is in turn slidable along guides 25A of the crosspiece 25. To this end, a first plate 39 is slidably integrally joined with the upright 29 through slides 39K that are slidable relatively to the guide 29B. The first plate 39 carries the first electromechanical actuator 31. Such actuator 31 allows the sliding of the upright 29 in the slides 39K and the movement along the axis W (orthogonal to the work surface 2) of the gripping assembly 38.

The first plate 39 is associated with a second plate 34 and a third plate 35 which is integrally joined with the belt 30B. The first plate 39 has slides 39W that are slidable along the crosspiece 25.

A second electromechanical actuator 32 (comprising an electric motor 32A and gear and idlers 32B) allows a rotation of the gripping assembly 38 around the axis W. Such second actuator 32 is associated with a second plate 34 integrally joined with the upright 29A.

As shown, all such electric motors or actuators are associated with the plates 39 and 34 of the manipulator 29. The second plate supports the gripping assembly 38 of the stack of product 1 through which the manipulator 29 cooperates directly with each stack of product 1 and moves it.

The gripping assembly 38 has a plurality of gripping elements 40 spaced apart from each other adapted to directly cooperate with each stack of product 1 and in particular cooperate with opposite sides of such stack so as to be able to collect it from the work surface 2 retaining it at opposite ends in a substantially extended position.

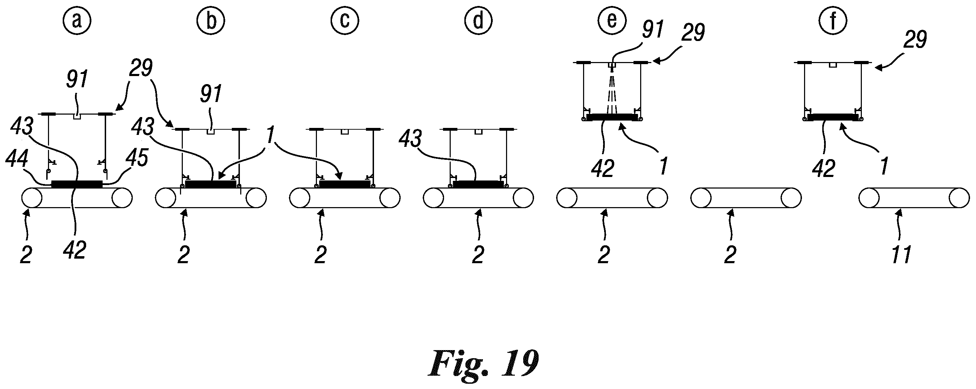

More particularly, also with reference to figures 19 and 20 (besides 5-15), each stack of product 1 comprises a lower face 42 adapted to contact the belts 3 or the work surface 2 prior to collecting the stack for boxing, an upper face 43 (opposite to the lower one) and opposite sides 44 and 45. Such faces 42 and 43 are adapted to be clamped between support and transport means 46 of each gripping element 40 at said opposite sides 44 and 45 so as to allow to retain the stack of product 1 during the movement in extended position; this due to the fact that said support and transport means 46 cooperate with each stack of product 1 in the proximity of its opposite sides 44 and 45 and they maintain the extended position thereof with which the stack 1 is present on the work surface 2.

As described hereinafter, the stack of product 1 is "gripped" by the support and transport means 46 at four lateral areas.

Each gripping element 40 is associated with a rod 50 that is slidably constrained to a common support 51 with which the second plate 34 is integrally joined. Preferably, two pairs 52 of gripping elements 40 (arranged adjacent to each other) are supported by such common support 51 (for example defined by an elongated section), said pairs being spaced from each other. The distance between the pairs of gripping elements is preferably and advantageously adjustable, manually or using actuators. Mechanical stops 53 lock such pairs in a desired position clamping on the support 51.

In cases where there are movement actuators, they can be pneumatic (associated symmetrically with each pair 52 or with only one of such pairs), pneumatic (like in the case mentioned above) but with the option of manually adjusting the initial position as a function of the size of the product, or electromechanical (with variable stroke, symmetrical or non-symmetrical). Actuators 54 associated with both pairs 52 can be jointly or separately activated to approach such pairs 52 with a pre-established stroke so as to allow the introduction of the stack of product 1 into a box 13.

Besides the possibility of adjusting the distance between the pairs 52 of the gripping elements, the gripping elements 40 of each pair may be adjustably spaced apart from each other, for example manually (but also pneumatically or using electromechanical actuators).

This allows to suitably adjust the gripping areas of each stack of product 1 also as a function of the type, morphology and geometric characteristics of the sacs or bags so as to have an excellent grip of the stack mentioned above for a successful insertion into the box 13.

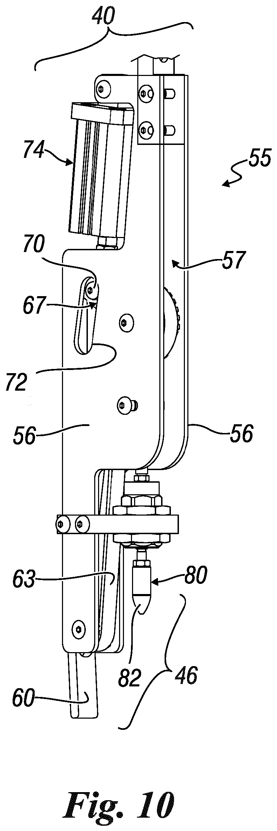

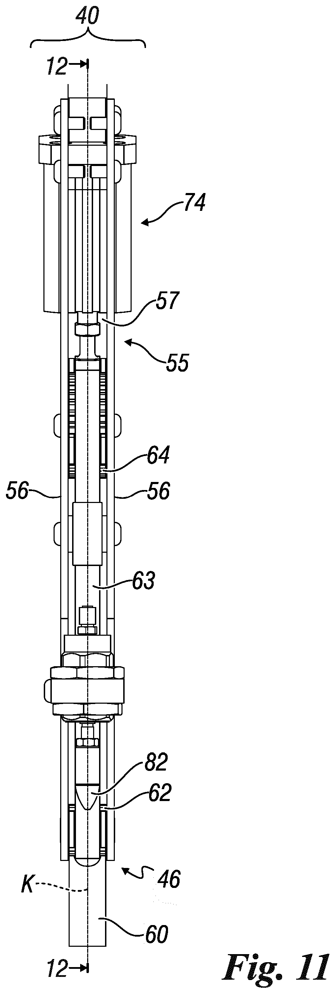

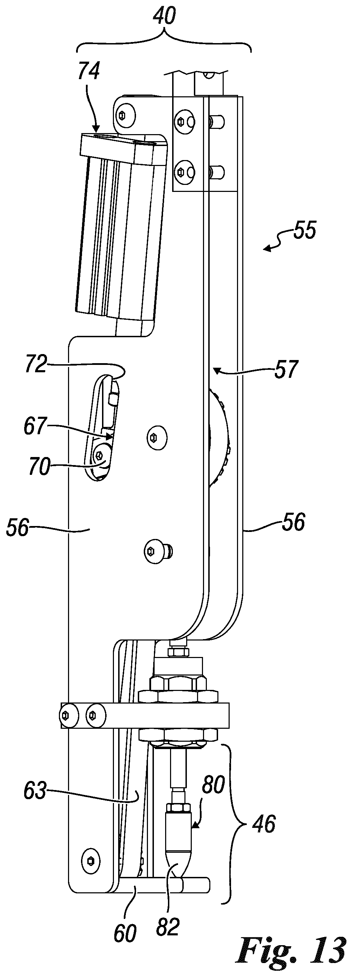

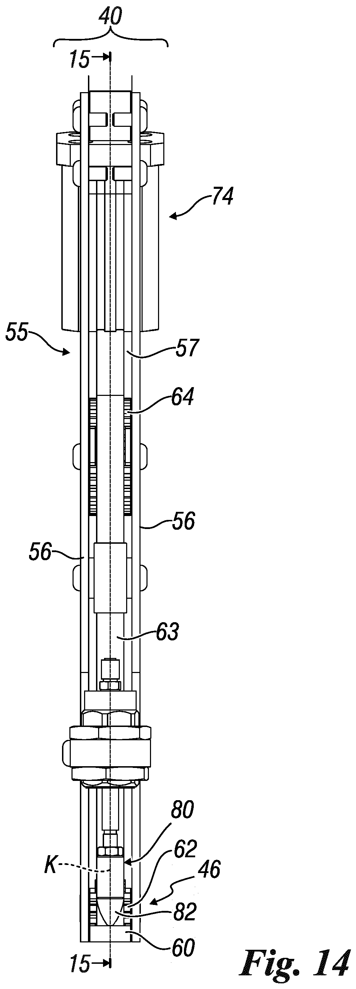

As mentioned, each gripping element 40 comprises support and transport means 46 adapted to clamp a corresponding part of a stack of product 1 between them. Such support and transport means 46 (see figures 10-15) are associated with a vacant end of a body 55 of the gripping element for example defined by plates 56 faced at a distance and parallel to each other between which there is provided for a cavity 57 containing an actuator unit of a movable fin 60 (or "finger") of the support and transport means 46. Such movable fin or finger 60 is connected to a gear 62 (inside the cavity 57) cooperating with a toothed belt 63 which is wound on a gearwheel 64 (inside said cavity 57 and hinged to the plates 56) and connected to a movable arm 67 in two points 66; a second end 68 of such arm 67 comprises laterally protruding pins 70 movable in discharge slots 72 obtained in each plate 56. Such second end 68 of the movable arm 67 is further integrally joined using said pins 70, with a stem 73 of a pneumatic actuator 74 whose body 75 is constrained to the body 55 of the gripping element 40 in any known manner.

A belt tensioner 76 is preferably present in the cavity 57 of the body 55 mentioned above.

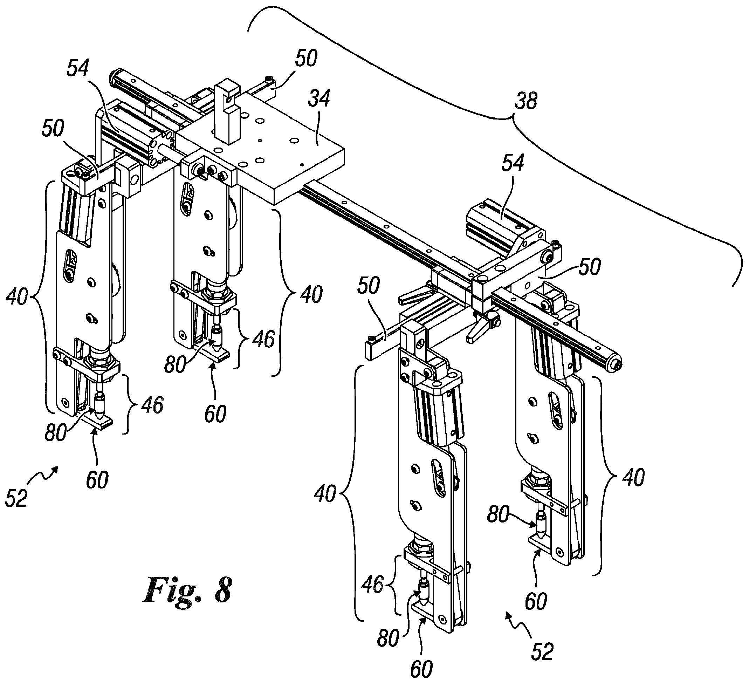

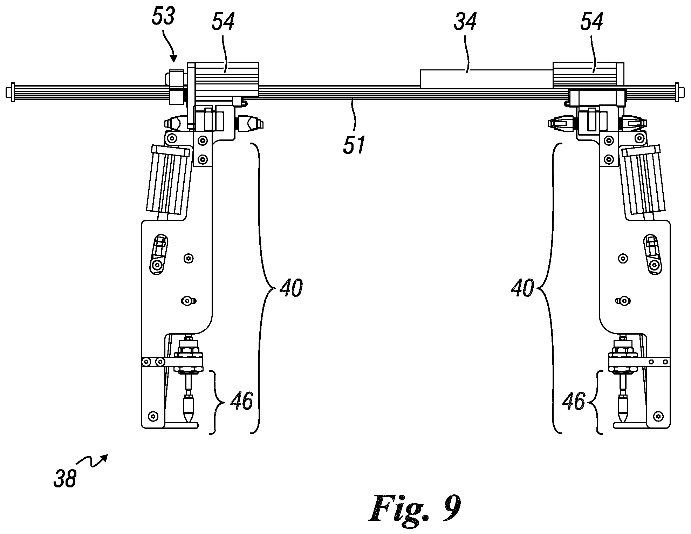

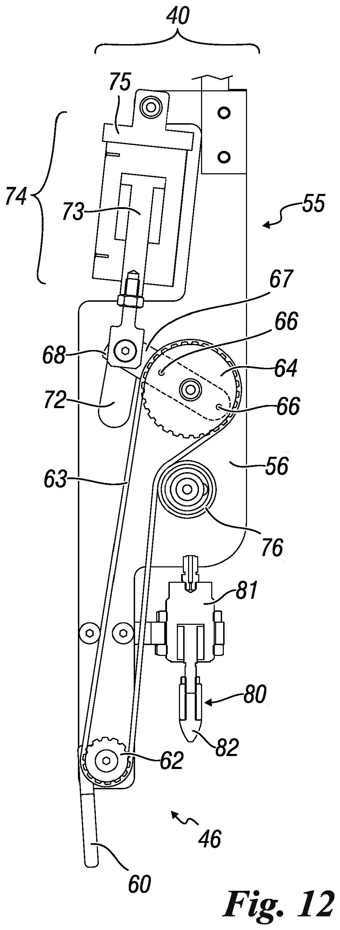

In this manner, the actuation of the pneumatic actuator 74 starting from the position of figure 12, moves the stem towards the internal of the cavity 57; the arm 67 rotates the gearwheel 64 which drives the belt 63 and which in turn rotates the gear 62. As a result, the movable finger 60 connected with such gear, also rotates and moves from an extended position that is protruding from the corresponding body 55, for example parallel to a longitudinal axis K of the gripping element 40 (as shown in figures 10, 11 and 12) to a folded position that is angled with respect to such axis for example orthogonal thereto (figures 8, 9 and 13-15) nearing a crushing or pressing element 80 (which overlies it) of the support and transport means 46 adapted to cooperate with the finger 60 to retain a portion of the stack of product 1 when collecting from the work surface 2 and boxing, as will be described hereinafter.

In particular, the crushing or pressing element 80 is a movable piston with respect to a pneumatic cylinder 81 integrally joined with the body 55 of the gripping element 40 and it comprises an end 82 adapted to contact the upper face 43 of the stack of product 2, while the finger 60 is adapted to contact and support the lower face 42 of such stack. In this manner, the finger defines a surface for supporting the part of the corresponding stack of product 1 and the crushing element 80 locks such part of stack on the finger 60.

Should the finger not be orthogonal to the axis K as shown in the figures, obviously also the crushing or pressing element 80 would allow suitable spatial lying, inclined with respect to such axis K, so as to be able to cooperate with the corresponding finger 60 to retain the stack of product 1.

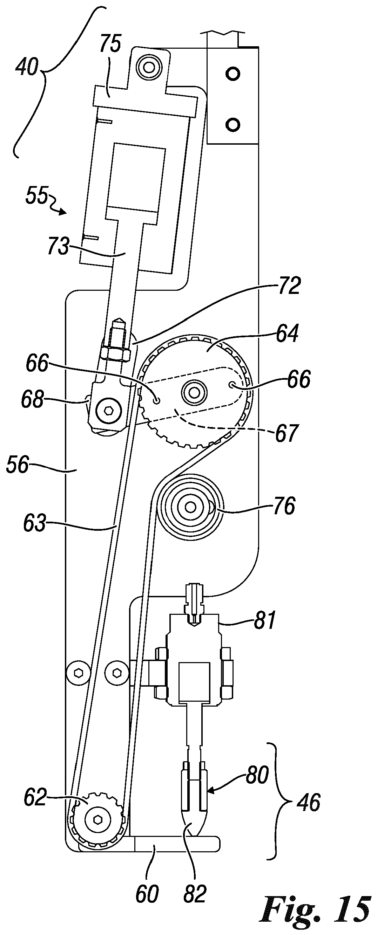

When the finger 60 is positioned for example orthogonally to the axis K mentioned above (as shown in the figures), the crushing element mentioned above is activated, so as move the end 82 from an initial position close to the cylinder 81 to a final position close to the finger 60 (respectively see figures 12 and 15, in particular).

The boxes 13 move on the work surface 11 arranged on the side of the work surface 2 on which the stacks of product 1 move downstream of their production line. Such boxes 13, on the belts 12 of said work surface 11, may vary in shape and size, but they are usually rectangular-based parallelepiped at the lower face 42 (see figures 16 and 17). Such boxes may be loaded on the work surface 11 with the larger sides 13M (only one indicated in the figures) of such base parallel to the movement direction M of the boxes on the surface 11 (like in figure 16) or with the larger side 13M orthogonal to such direction (like in figure 17). In the former case (figure 16), the manipulator 29 moves along the crosspiece 25 until it is positioned above the box 13 so as to insert (as will be indicated) the transported stack of product 1 therein. In the latter case, as a function of the position of the box 13, such manipulator 29 must rotate around the axis W mentioned previously (arrow B of figure 2 and 17) before it is positioned at the box 13.

However, in both cases, the work surface 11 provides for means for centring and stopping the box 13 so as to allow the deposition of the stack of product 1 therein. Such means (see figures 16-18) for example comprise an edge 85 arranged at the work surface 11 with at least one portion 85A parallel to the movement direction M of the boxes 13, and a second edge 86, orthogonal to such direction M, adapted to lock the box in its movement. A movable edge 87, subjected to any pusher element 88 actuated in any known manner (for example pneumatically) cooperates with each box 13 and pushes it against the edge 85 to correctly position such box for boxing. The edge 86 (or equivalent stop means associated with the work surface 11) may be movable to allow the automatic removal of the box 13 from the work surface 11.

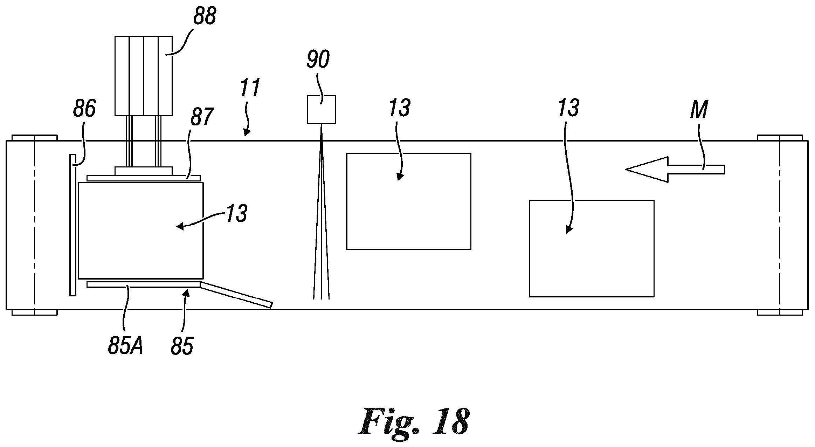

Obviously, the system 5 comprises a plurality of per se known detection members associated at least with the manipulator, with the work surface 2 and with the work surface 11 so as to allow to control each movement and position of the work surfaces, of the manipulator (and of its components), of the stacks of product 1 and of the boxes 13. Such detection members (for example a photocell 90 associated with the work surface 11 shown in figure 18 or the photocell 91 associated with the manipulator 29 shown in figures 19 and 20) are of the known type and they will not be described further. Just like all actuators present in the system S, said detection members are controlled by a control unit (PLC, with microprocessor or the like) which oversees the whole operation of the system S in a per se known manner and related to the detection carried out by said detection member or, for example, related to the operation of the electromechanical actuators or electric motors of the system regarding which the control unit continuously checks the operating parameters and in particular the resistant torque or the absorbed current to check any locking or more simply the achievement of an end-stroke position of the moved member.

The method according to the invention will now be described with particular reference to figures 19 and 20 where the letters present indicate the various steps of the method.

In a first step of the method (step a) the manipulator 29 is in the position of figure 10 (for example) or with the (movable) finger 60 protruding from the body 55, for example arranged parallel to the axis K of each gripping element 40. The gripping elements 40 are arranged in mutual position so as to be arranged at four areas (for example angular) close to the opposite sides 44 and 45 of each stack of product 1 present on the work surface 2.

In such position, the manipulator is lowered (step b) by the actuators with which it is provided at the work surface 2 so that the movable fingers 60 of two gripping elements 40 of two pairs of different gripping elements 52 penetrate into the space 4 present between two (movable) belts 3. At this point, the actuator 74 of each gripping element 40 is activated and the fingers 60 of all elements are arranged in a folded position, for example orthogonally to the axis K mentioned above (step c).

Now, the crushing element 80 of each gripping element 40 is activated (by acting in a known manner on the cylinder 81 with respect to which it moves) (step d). In this manner, the opposite ends of the stack of product 1 are crushed between the element 80 and the finger 60 of each gripping element 40 and retained by such element and finger. In this step, the belts 3 are stationary.

Subsequently, the manipulator 29 is lifted from the work surface 2 (by ensuring, through the detector member 91, that the stack is correctly lifted and possibly discarding the stack of product 1 if not suitable for boxing). Therefore, the manipulator is translated (and possibly rotated) towards the work surface 11 (step f). The stack of product 1 is extended due to its lateral retention.

Upon reaching the work surface 11 (step g), the pairs 52 of gripping elements 40 are approached (step h) so that they can be introduced into the box; the stack of product 1 bends (as shown by 95 in step h of figure 20) slightly and centrally. Therefore, the manipulator 29 is lowered at least partially until inside the box 13 (step i) so as to move the stack of product 1 close to the lower face or bottom wall 17 of the box (or the upper face of the stack of product 1 already present on such face). This can be detected by controlling the resistant torque of the motor 31A or through an algorithm for controlling the manipulator 29 which causes the lowering movement thereof in the volume 15 of the box as a function of the type of box memorised previously.

Subsequently, the manipulator 29 lifts to leave a sufficient space or distance of the bottom wall 17 of the box (or from the upper face of the stack of product already present in the box) to allow the movement of the fingers 60 which are arranged along the axis K of the relative gripping elements 40. The manipulator stops in such position (step j) near the face or bottom wall 17 of the box (or of the upper face of the stack of products already previously inserted into the box) at a distance at least equal to the length of the fingers 60. After the stop, with methods similar to the ones described above, the fingers 60 are rotated and arranged parallel (for example) to the axis K of the respective gripping elements 40 (step k) and the stack of products 1 may fall on the bottom wall or lower face 42 of the box with a short movement (equal to the length of the fingers 60, that is by a few centimetres). This does not cause any significant relative movement between the sacs or bags, and the stack 1 remains substantially as is.

The manipulator 29 is therefore lifted from the work surface 11 (step l) and it is prepared for the return above the work surface 2 (step m) spacing the pairs 52 again.

Thanks to the invention and due to the fact that the manipulator penetrates into the box 13, the stack of product remains compact in the box and multiple stacks can be arranged side by side in the latter as a function of the size of the box and of the product. Furthermore, all the movement is carried out by suitably retaining the stack of product in a substantially extended position, without risks that such stack can fall from the manipulator, given that the gripping of the latter (obtained by the cooperation between the finger 60 and the crushing element 80 of each gripping element 40) is extremely safe.

The method subject of the invention is implemented so as to match the production rate of the sacs or bags of the production line, it allows to operate on products of different shape and size and it meets high quality standards.

Although an embodiment of the invention has been described, others can be carried out by a person skilled in the art based on the technical knowledge thereof and the description outlined above so as to implement a method and provide a system according to the characteristics indicated in the claims below.

## Claims

1. Method for arranging stacks of sacs or bags or product (1) at the exit from the production line in boxes (13), said stack comprising a lower face (42), an upper face (43) and opposite sides (44, 45), each stack of product (1) being collected from a preferably movable work surface (2) using gripping elements (40) and being transported at the box (13) adapted to house such stack of product (1), said box having a bottom wall (17) and an opening (16) for access into an internal volume (15), the stack of product (1) collected from the work surface (2) being carried by said gripping elements (40) within the internal volume (16) of the box, said stack of product (1) being released only after it has been fully inserted into the box (13) so that it rests on the bottom wall (17) of the box or on a possible stack of product (1) already present in said box, remaining in an extended position, **characterised in that** it comprises the following steps:
a) lowering the gripping elements (40) up to the work surface (2) on which the stack of product to be arranged on the box lies, a movable part (60) of each gripping element (40) moving beyond said work surface,
b) rotating said movable part (60) of each gripping element (40) so that it is positioned at the lower face (42) of the stack of product (1),
c) lowering a crushing or pressing member (80) of each movable gripping element (40) towards the stack of product (1) so as to clamp the stack of products pushing it towards the rotated movable part (60), said crushing or pressing member (80) overlying said movable part (60) after its rotation,
d) lifting the gripping elements from the work surface (2) removing the stack of product (1) therefrom, verifying the actual gripping of the stack of product (1) correctly for the boxing, and moving such stack of product at the box (13),
e) approaching the gripping elements so as to be able to introduce them into the box,
f) lowering each gripping element (40) into the internal volume (15) of the box (13) up to the complete introduction of the stack of product (1) into such volume, said lowering being followed by a stop at a distance from the bottom wall (17) or of the stack already present in the box equal to the length of said movable part (60) of each gripping element (40),
g) rotating each movable part (60) so as to deposit the stack of product (1) on the bottom wall (17) of the box (13) or on the stack of product (1) already present therein,
h) lifting each gripping element (40) from the box removing it therefrom,
i) returning each gripping element (40) above the work surface where the stacks of product (1) are placed.

2. Method according to claim 1, **characterised in that** the stack of product (1) is collected from the work surface (2) retaining it on the lower face (42) and on the upper one at the opposite sides (44, 45) so as to keep it in extended position.

3. Method according to claim 2, **characterised in that** the stack of product (1) is retained at a plurality of areas close to its opposite sides (44, 45).

4. Method according to claim 2, **characterised in that** said areas are angular areas.

5. Method according to claim 1, **characterised in that** the stacks of product (1) are carried in the boxes (13) present on a second preferably movable work surface (11) arranged beside the one on which such stacks are present, the movement of the two surfaces (1, 11) and of the gripping elements (40) being synchronised, the transfer of each stack of product from the respective work surface to the second work surface being obtained through the translatory or rototranslatory movement of the gripping elements (40).

6. Method according to claim 1, **characterised in that** during transport, the gripping of each stack of product (1) is controlled, preferably continuously.

7. Method according to claim 1, **characterised in that** the stack of product (1) is bent before it is inserted into the box (13).

8. Method according to claim 1, **characterised in that** the box (13) is moved autonomously and positioned in a pre-established position to receive the stack of product (1).

9. System for arranging stacks of sacs or bags or product (1) exiting from the production line in boxes (13), each stack of product (1) comprising a lower face (42), an upper face (43) and opposite sides (44, 45), each stack of product (1) being collected from a preferably movable work surface (2) through gripping elements (40) spaced apart from each other and being transported at the box adapted to house such stack of product (1), said boxes (13) having an internal volume (15) and a bottom wall (17), the gripping elements (40) each comprising support and transport means(46) adapted to collect each stack of product (1) and transfer it into the internal volume (15) of the box (13), **characterised in that** said support and transport means (46) comprises a rotary member (60) which moves beyond the work surface on which the stack of product lies, said rotary member (60) subsequently rotating so as to be arranged below the lower face (42) of the stack of product (1), and a crushing or pressing member (80) adapted to press said stack of product on said rotary member (60) so as to retain said stack of product with the latter during its transfer until inside the internal volume of the box (13), said stack of product (1) being released only when it is close to said bottom wall (17) of the box or of a stack of product previously inserted into said box (13).

10. System according to claim 9, **characterised in that** each of said gripping elements (40) comprises a body (55) having a longitudinal axis (K), the support and transport means being associated with a vacant end (46) of such bodies (55), the rotary member of such support and transport means (46) being a movable finger (60) adapted to take a first operative position in which such finger (60) protrudes from the body (55) of the corresponding gripping element (40) and a second operative position in which such finger (60) is folded with respect to a longitudinal axis (K) of such body (55), said finger (60) being moved by actuator means (62, 63, 64, 67, 74) at least partly integrally joined with said body (55) of the gripping element (40), said crushing or pressing member (80) being integrally joined with pneumatic actuator means (81) carried by said body (55).

11. System according to claim 9, **characterised in that** said gripping elements (40) are part of a manipulator (28) movable above the work surface (2) according to at least one transversal axis (C) and one (W) orthogonal to said work surface (2), said manipulator (29) comprising at least two gripping elements (40) spaced apart from each other, but with the possibility of an independent relative mutual approaching movement.

12. System according to claim 9, **characterised in that** said manipulator (29) moves along a crosspiece (25) of a bridge structure (21) overlying the work surface, said bridge structure having supports (22, 23) integrally joined with fixed sides (24) of the work surface (2), the crosspiece being arranged orthogonally to the direction of movement of the stacks of product (1) on said work surface (2) and extending above a second work surface (11) adapted to support boxes (13) in which the stacks of product (1) are to be arranged.

13. System according to claims 10 and 12, **characterised in that** the work surface (2) of the stacks of product (1) is defined by mutually movable transport members (3), a space (4) adapted to house the movable fingers (60) of the gripping elements (40) being present between said transport members (3) or in the latter when they protrude from the corresponding bodies (55) of the gripping elements.

14. System according to claim 12, **characterised in that** the work surface (11) on which the boxes (13) are arranged is movable, means for centring and stopping the boxes (13) during their boxing being provided for at and on said surface.

15. System according to claim 10, **characterised in that** it comprises at least one of the following characteristics:
- control means (90, 91) are provided for controlling the movement of the gripping elements (40) with respect to the stacks of product (1) and with respect to the boxes (13), for controlling the gripping of such stacks of product (1) and their release on the bottom wall (17) of each box;
- the support and transport means (46) retain the stack at its opposite sides, preferably in angular positions of the stack,
- the gripping elements (40) may rotate around an axis (W) orthogonal to the movable work surface (2);
- the gripping elements (40) are subject to pneumatic or electromechanical actuator means (30, 31A, 32A) which allow a symmetric and/or autonomous and non-symmetric movement, with variable stroke and actuatable jointly or individually,
- multiple stacks of product (1) are arranged side by side in each box (13) so as to define autonomous columns of stacks of product (1) resting on the bottom wall (17) of the box (13).

## Patentansprüche

1. Verfahren zum Anordnen von Stapeln von Säcken oder Beuteln oder Produkt (1) an dem Ausgang der Produktionslinie in Schachteln (13), der Stapel umfassend eine Unterseite (42), eine Oberseite (43) und gegenüberliegende Seiten (44, 45), wobei jeder Produktstapel (1) von einer vorzugsweise bewegbaren Arbeitsfläche (2) unter Verwendung von Greifelementen (40) entnommen und zu der Schachtel (13) transportiert wird, die angepasst ist, um einen solchen Produktstapel (1) aufzunehmen, wobei die Schachtel eine Bodenwand (17) und eine Öffnung (16) für einen Zugang in ein inneres Volumen (15) aufweist, wobei der von der Arbeitsfläche (2) entnommene Produktstapel (1) von den Greifelementen (40) in das innere Volumen (16) der Schachtel getragen wird, wobei der Produktstapel (1) erst freigegeben wird, nachdem er vollständig in die Schachtel (13) eingeführt wurde, sodass er auf der Bodenwand (17) der Schachtel oder auf einem möglichen, bereits in der Schachtel vorhandenen Produktstapel (1) aufliegt und in einer erweiterten Position verbleibt, **dadurch gekennzeichnet, dass** es die folgenden Schritte umfasst:
a) Absenken der Greifelemente (40) bis zu der Arbeitsfläche (2), auf der der Produktstapel, der in der Schachtel angeordnet werden soll, liegt, wobei sich ein bewegbarer Teil (60) von jedem Greifelement (40) über die Arbeitsfläche hinaus bewegt,
b) Drehen des bewegbaren Teils (60) von jedem Greifelement (40), sodass er an der Unterseite (42) des Produktstapels (1) positioniert ist,
c) Absenken eines Quetsch- oder Druckelements (80) von jedem bewegbaren Greifelement (40) in Richtung des Produktstapels (1), um den Produktstapel einzuspannen und ihn in Richtung des gedrehten bewegbaren Teils (60) zu schieben, wobei das Quetsch- oder Druckelement (80) den bewegbaren Teil (60) nach dessen Drehung überlagert,
d) Anheben der Greifelemente von der Arbeitsfläche (2) und Entfernen des Produktstapels (1) davon, Überprüfen, ob das aktuelle Ergreifen des Produktstapels (1) für das Einschachteln korrekt ist, und Bewegen eines solchen Produktstapels in die Schachtel (13),
e) Annähern der Greifelemente, um in der Lage zu sein, sie in die Schachtel einzuführen,
f) Absenken von jedem Greifelement (40) in das innere Volumen (15) der Schachtel (13) bis zum vollständigen Einführen des Produktstapels (1) in dieses Volumen, wobei auf das Absenken ein Anhalten in einem Abstand von der Bodenwand (17) oder von dem bereits in der Schachtel vorhandenen Stapel folgt, der gleich wie die Länge des bewegbaren Teils (60) von jedem Greifelement (40) ist,
g) Drehen von jedem bewegbaren Teil (60), um den Produktstapel (1) auf der Bodenwand (17) der Schachtel (13) oder auf dem bereits darin befindlichen Produktstapel (1) abzusetzen,
h) Anheben von jedem Greifelement (40) aus der Schachtel, um es daraus zu entfernen,
i) Zurückbewegen von jedem Greifelement (40) über die Arbeitsfläche, auf der die Produktstapel (1) platziert sind.

2. Verfahren nach Anspruch 1, **dadurch gekennzeichnet, dass** der Produktstapel (1) von der Arbeitsfläche entnommen wird, wobei er an der Unterseite (42) und an der Oberseite an den gegenüberliegenden Seiten (44, 45) gehalten wird, sodass er in erweiterter Position gehalten wird.

3. Verfahren nach Anspruch 2, **dadurch gekennzeichnet, dass** der Produktstapel (1) an einer Vielzahl von Bereichen in der Nähe seiner gegenüberliegenden Seiten (44, 45) gehalten wird.

4. Verfahren nach Anspruch 2, **dadurch gekennzeichnet, dass** die Bereiche winkelförmige Bereiche sind.

5. Verfahren nach Anspruch 1, **dadurch gekennzeichnet, dass** die Produktstapel (1) in den Kästen (13) getragen werden, die auf einer zweiten, vorzugsweise bewegbaren Arbeitsfläche (11) vorhanden sind, die neben derjenigen angeordnet ist, auf der solche Stapel vorhanden sind, wobei die Bewegung der zwei Oberflächen (1, 11) und der Greifelemente (40) synchronisiert ist, das Übertragen von jedem Produktstapel von der jeweiligen Arbeitsfläche zu der zweiten Arbeitsfläche durch die translatorische oder rototranslatorische Bewegung der Greifelemente (40) erlangt wird.

6. Verfahren nach Anspruch 1, **dadurch gekennzeichnet, dass** während eines Transports das Ergreifen von jedem Produktstapel (1) gesteuert wird, vorzugsweise kontinuierlich.

7. Verfahren nach Anspruch 1, **dadurch gekennzeichnet, dass** der Produktstapel (1) gebogen wird, bevor er in die Schachtel (13) eingeführt wird.

8. Verfahren nach Anspruch 1, **dadurch gekennzeichnet, dass** die Schachtel (13) autonom bewegt und in einer vorher festgelegten Position positioniert wird, um den Produktstapel (1) aufzunehmen.

9. System zum Anordnen von Stapeln von Säcken oder Beuteln oder Produkt (1), die aus der Produktionslinie austreten, in Schachteln (13), jeder Produktstapel (1) umfassend eine Unterseite (42), eine Oberseite (43) und gegenüberliegende Seiten (44, 45), wobei jeder Produktstapel (1) von einer vorzugsweise bewegbaren Arbeitsfläche (2) durch voneinander beabstandete Greifelemente (40) entnommen und zu der Schachtel transportiert wird, die angepasst ist, um einen solchen Produktstapel (1) aufzunehmen, die Schachteln (13) ein inneres Volumen (15) und eine Bodenwand (17) aufweisen, die Greifelemente (40) jeweils umfassend Halte- und Transporteinrichtungen (46), die angepasst sind, um jeden Produktstapel (1) zu entnehmen und in das innere Volumen (15) der Schachtel (13) zu übertragen, **dadurch gekennzeichnet, dass** die Halte- und Transporteinrichtungen (46) ein drehbares Element (60) umfassen, das sich über die Arbeitsfläche hinaus bewegt, auf der der Produktstapel liegt, wobei das Drehelement (60) anschließend dreht, um unter der Unterseite (42) des Produktstapels (1) angeordnet zu sein, und ein Quetsch- oder Druckelement (80), das angepasst ist, um den Produktstapel auf das Drehelement (60) zu drücken, um den Produktstapel damit diesem während seines Übertragens bis in das Innere des inneren Volumens der Schachtel (13) zurückzuhalten, wobei der Produktstapel (1) erst dann freigegeben wird, wenn er in der Nähe der Bodenwand (17) der Schachtel oder eines zuvor in die Schachtel (13) eingeführten Produktstapels ist.

10. System nach Anspruch 9, **dadurch gekennzeichnet, dass** jedes der Greifelemente (40) einen Körper (55) umfasst, der eine Längsachse (K) aufweist, wobei die Halte- und Transporteinrichtungen mit einem freien Ende (46) dieser Körper (55) assoziiert sind, wobei das Drehelement solcher Halte- und Transporteinrichtungen (46) ein bewegbarer Finger (60) ist, der angepasst ist, um eine erste Betriebsstellung, in der ein solcher Finger (60) aus dem Körper (55) des entsprechenden Greifelements (40) hervorsteht, und eine zweite Betriebsstellung, in der ein solcher Finger (60) in Bezug auf eine Längsachse (K) eines solchen Körpers (55) umgebogen ist, einzunehmen, wobei der Finger (60) durch Aktuatoreinrichtungen (62, 63, 64, 67, 74) bewegt wird, die zumindest teilweise einstückig mit dem Körper (55) des Greifelements (40) verbunden sind, wobei das Quetsch- oder Druckelement (80) einstückig mit einer pneumatischen Aktuatoreinrichtungen (81) verbunden ist, die von dem Körper (55) getragen werden.

11. System nach Anspruch 9, **dadurch gekennzeichnet, dass** die Greifelemente (40) Teil eines Manipulators (28) sind, der oberhalb der Arbeitsfläche (2) gemäß mindestens einer Querachse (C) und einer Achse (W) orthogonal zu der Arbeitsfläche (2) bewegbar ist, der Manipulator (29) umfassend mindestens zwei voneinander beabstandete Greifelemente (40), aber mit der Möglichkeit einer unabhängigen relativen Annäherungsbewegung zueinander.

12. System nach Anspruch 9, **dadurch gekennzeichnet, dass** sich der Manipulator (29) entlang einer Traverse (25) einer Brückenstruktur (21) bewegt, die über der Arbeitsfläche liegt, wobei die Brückenstruktur Halterung (22, 23) aufweist, die einstückig mit festen Seiten (24) der Arbeitsfläche (2) verbunden sind, wobei der Querträger orthogonal zu der Bewegungsrichtung der Produktstapel (1) auf der Arbeitsfläche (2) angeordnet ist und sich über eine zweite Arbeitsfläche (11) erstreckt, die angepasst ist, um Schachteln (13) zu tragen, in denen die Produktstapel (1) angeordnet werden sollen.

13. System nach den Ansprüchen 10 und 12, **dadurch gekennzeichnet, dass** die Arbeitsfläche (2) der Produktstapel (1) durch gegenseitig bewegbare Transportelemente (3) definiert ist, ein Raum (4), der angepasst geeignet ist, um die bewegbaren Finger (60) der Greifelemente (40) aufzunehmen, der zwischen den genannten Transportelementen (3) oder darin vorhanden sind, wenn sie aus den entsprechenden Körpern (55) der Greifelemente hervorstehen.

14. System nach Anspruch 12, **dadurch gekennzeichnet, dass** die Arbeitsfläche (11), auf der die Schachteln (13) angeordnet sind, bewegbar ist, Einrichtungen zum Zentrieren und Anhalten der Schachteln (13) während ihres Einschachtelns an und auf der Oberfläche bereitgestellt sind.

15. System nach Anspruch 10, **dadurch gekennzeichnet, dass** es mindestens eine der folgenden Eigenschaften umfasst:
- Steuerungseinrichtungen (90, 91) sind bereitgestellt, um die Bewegung der Greifelemente (40) in Bezug auf die Produktstapel (1) und in Bezug auf die Schachteln (13) zu steuern, um das Greifen dieser Produktstapel (1) und ihre Freigabe an der Bodenwand (17) jeder Schachtel zu steuern;
- die Halte- und Transporteinrichtungen (46) halten den Stapel an seinen gegenüberliegenden Seiten, vorzugsweise in Winkelpositionen des Stapels,
- die Greifelemente (40) können um eine Achse (W) rechtwinklig zu der bewegbaren Arbeitsfläche (2) drehen;
- die Greifelemente (40) unterliegen pneumatischen oder elektromechanischen Aktuatoreinrichtungen (30, 31A, 32A), die eine symmetrische und/oder autonome und unsymmetrische Bewegung mit variablem Hub ermöglichen und gemeinsam oder einzeln betätigbar sind,
- mehrere Produktstapel (1) sind nebeneinander in jeder Schachtel (13) angeordnet, um autonome Säulen von Produktstapeln (1) zu definieren, die auf der Bodenwand (17) der Schachtel (13) aufliegen.

## Revendications

1. Procédé permettant de disposer des piles de sacs, de sachets ou de produits (1) à la sortie de la chaîne de production dans des caisses (13), ladite pile comprenant une face inférieure (42), une face supérieure (43) et des côtés opposés (44, 45), chaque pile de produits (1) étant collectée à partir d'une surface de travail (2) de préférence mobile à l'aide d'éléments de préhension (40) et étant transportée vers la caisse (13) adaptée pour recevoir cette pile de produits (1), ladite caisse comportant une paroi de fond (17) et une ouverture (16) permettant d'accéder à un volume interne (15), la pile de produits (1) prélevée sur la surface de travail (2) étant transportée par lesdits éléments de préhension (40) à l'intérieur du volume interne (16) de la caisse, ladite pile de produits (1) n'étant libérée qu'après avoir été entièrement insérée dans la caisse (13) de manière à reposer sur la paroi inférieure (17) de la caisse ou sur une éventuelle pile de produits (1) déjà présente dans ladite caisse, en restant en position étendue, **caractérisé en ce qu'**il comprend les étapes suivantes :
a) l'abaissement des éléments de préhension (40) jusqu'à la surface de travail (2) sur laquelle repose la pile de produits à disposer dans la caisse, une partie mobile (60) de chaque élément de préhension (40) se déplaçant au-delà de ladite surface de travail,
b) la rotation de ladite partie mobile (60) de chaque élément de préhension (40) afin qu'il soit positionné à la face inférieure (42) de la pile de produits (1),
c) l'abaissement d'un élément de compression ou de pressage (80) de chaque élément de préhension mobile (40) vers la pile de produits (1) afin de serrer la pile de produits en la poussant vers la partie mobile tournée (60), ledit élément de compression ou de pression (80) recouvrant ladite partie mobile (60) après sa rotation,
d) le soulèvement des éléments de préhension de la surface de travail (2), le retrait de la pile de produits (1) de celle-ci, la vérification de la préhension correcte de la pile de produits (1) pour l'emballage, et le déplacement de cette pile de produits vers la caisse (13),
e) le rapprochement des éléments de préhension afin de pouvoir les introduire dans la caisse,
f) l'abaissement de chaque élément de préhension (40) dans le volume interne (15) de la caisse (13) jusqu'à l'introduction complète de la pile de produits (1) dans ce volume, ledit abaissement étant suivi d'un arrêt à une distance de la paroi inférieure (17) ou de la pile déjà présente dans la caisse égale à la longueur de ladite partie mobile (60) de chaque élément de préhension (40),
g) la rotation de chaque partie mobile (60) de manière à déposer la pile de produits (1) sur la paroi inférieure (17) de la caisse (13) ou sur la pile de produits (1) déjà présente à l'intérieur,
h) le soulèvement de chaque élément de préhension (40) de la caisse afin de le retirer de celle-ci,
i) le retour de chaque élément de préhension (40) au-dessus de la surface de travail où sont placées les piles de produits (1).

2. Procédé selon la revendication 1, **caractérisé en ce que** la pile de produits (1) est récupérée à partir de la surface de travail (2) en la retenant sur la face inférieure (42) et sur la face supérieure au niveau de ses côtés opposés (44, 45) afin de la maintenir en position étendue.

3. Procédé selon la revendication 2, **caractérisé en ce que** la pile de produits (1) est maintenue au niveau d'une pluralité de zones proches de ses côtés opposés (44, 45).

4. Procédé selon la revendication 2, **caractérisé en ce que** lesdites zones sont des zones angulaires.

5. Procédé selon la revendication 1, **caractérisé en ce que** les piles de produits (1) sont transportées dans les caisses (13) présentes sur une deuxième surface de travail (11), de préférence mobile, disposée à côté de celle sur laquelle se trouvent ces piles, le mouvement des deux surfaces (1, 11) et des éléments de préhension (40) étant synchronisé, le transfert de chaque pile de produit de la surface de travail respective vers la deuxième surface de travail étant obtenu par le mouvement de translation ou de rotation-translation des éléments de préhension (40).

6. Procédé selon la revendication 1, **caractérisé en ce que** pendant le transport, la préhension de chaque pile de produits (1) est contrôlée, de préférence en continu.

7. Procédé selon la revendication 1, **caractérisé en ce que** la pile de produits (1) est pliée avant d'être insérée dans la caisse (13).

8. Procédé selon la revendication 1, **caractérisé en ce que** la caisse (13) est déplacée de manière autonome et positionnée dans une position prédéterminée pour recevoir la pile de produits (1).

9. Système permettant de disposer des piles de sacs, de sachets ou de produits (1) sortant de la chaîne de production dans des caisses (13), chaque pile de produits (1) comprenant une face inférieure (42), une face supérieure (43) et des côtés opposés (44, 45), chaque pile de produits (1) étant collectée à partir d'une surface de travail (2) de préférence mobile à l'aide d'éléments de préhension (40) espacés les uns des autres et étant transportée vers la caisse adaptée pour recevoir cette pile de produits (1), lesdites caisses (13) ayant un volume interne (15) et une paroi inférieure (17), les éléments de préhension (40) comprenant chacun des moyens de support et de transport (46) adaptés pour collecter chaque pile de produits (1) et la transférer dans le volume interne (15) de la caisse (13), **caractérisé en ce que** lesdits moyens de support et de transport (46) comprennent un élément rotatif (60) qui se déplace au-delà de la surface de travail sur laquelle repose la pile de produits, ledit élément rotatif (60) tournant ensuite de manière à être disposé sous la face inférieure (42) de la pile de produits (1), et un élément de compression ou de pressage (80) adapté pour presser ladite pile de produits sur ledit élément rotatif (60) de manière à retenir ladite pile de produits avec ce dernier pendant son transfert jusqu'à l'intérieur du volume interne de la caisse (13), ladite pile de produits (1) n'étant libérée que lorsqu'elle est proche de ladite paroi inférieure (17) de la caisse ou d'une pile de produits précédemment insérée dans ladite caisse (13).

10. Système selon la revendication 9, **caractérisé en ce que** chacun desdits éléments de préhension (40) comprend un corps (55) ayant un axe longitudinal (K), les moyens de support et de transport étant associés à une extrémité libre (46) de ces corps (55), l'élément rotatif de ces moyens de support et de transport (46) étant un doigt mobile (60) adapté pour prendre une première position opérationnelle dans laquelle ce doigt (60) fait saillie à partir du corps (55) de l'élément de préhension correspondant (40) et une deuxième position opérationnelle dans laquelle ledit doigt (60) est replié par rapport à un axe longitudinal (K) dudit corps (55), ledit doigt (60) étant déplacé par des moyens d'actionnement (62, 63, 64, 67, 74) au moins partiellement reliés de manière intégrale audit corps (55) de l'élément de préhension (40), ledit élément de compression ou de pression (80) étant relié de manière intégrale à des moyens d'actionnement pneumatiques (81) portés par ledit corps (55).

11. Système selon la revendication 9, **caractérisé en ce que** lesdits éléments de préhension (40) font partie d'un manipulateur (28) mobile au-dessus de la surface de travail (2) selon au moins un axe transversal (C) et un axe (W) orthogonal à ladite surface de travail (2), ledit manipulateur (29) comprenant au moins deux éléments de préhension (40) espacés l'un de l'autre, mais avec la possibilité d'un mouvement de rapprochement mutuel relatif indépendant.

12. Système selon la revendication 9, **caractérisé en ce que** ledit manipulateur (29) se déplace le long d'une traverse (25) d'une structure en pont (21) surplombant la surface de travail, ladite structure en pont comportant des supports (22, 23) reliés de manière solidaire aux côtés fixes (24) de la surface de travail (2), la traverse étant disposée orthogonalement à la direction de déplacement des piles de produits (1) sur ladite surface de travail (2) et s'étendant au-dessus d'une deuxième surface de travail (11) adaptée pour supporter des caisses (13) dans lesquelles les piles de produits (1) doivent être disposées.

13. Système selon les revendications 10 et 12, **caractérisé en ce que** la surface de travail (2) des piles de produits (1) est définie par des éléments de transport (3) mutuellement mobiles, un espace (4) adapté pour loger les doigts mobiles (60) des éléments de préhension (40) étant présent entre lesdits éléments de transport (3) ou dans ces derniers lorsqu'ils dépassent des corps correspondants (55) des éléments de préhension.

14. Système selon la revendication 12, **caractérisé en ce que** la surface de travail (11) sur laquelle les caisses (13) sont disposées est mobile, des moyens pour centrer et arrêter les caisses (13) pendant leur mise en caisse étant prévus au niveau et sur ladite surface.

15. Système selon la revendication 10, **caractérisé en ce qu'**il comprend au moins une des caractéristiques suivantes :
- des moyens de commande (90, 91) sont prévus pour commander le mouvement des éléments de préhension (40) par rapport aux piles de produits (1) et par rapport aux caisses (13), pour commander la préhension de ces piles de produits (1) et leur libération sur la paroi inférieure (17) de chaque caisse ;
- les moyens de support et de transport (46) maintiennent la pile sur ses côtés opposés, de préférence dans des positions angulaires de la pile,
- les éléments de préhension (40) peuvent tourner autour d'un axe (W) orthogonal à la surface de travail mobile (2) ;
- les éléments de préhension (40) sont soumis à des moyens d'actionnement pneumatiques ou électromécaniques (30, 31A, 32A) qui permettent un mouvement symétrique et/ou autonome et non symétrique, avec une course variable et pouvant être actionnés conjointement ou individuellement,
- plusieurs piles de produits (1) sont disposées côte à côte dans chaque caisse (13) de manière à définir des colonnes autonomes de piles de produits (1) reposant sur la paroi inférieure (17) de la caisse (13).
